(19) Europäisches Patentamt
European Patent Office
Office européen des brevets

(11) Veröffentlichungsnummer: **0 511 449 A1**

(12) # EUROPÄISCHE PATENTANMELDUNG

(21) Anmeldenummer: **91810335.9**

(51) Int. Cl.[5]: **C07F 9/38**

(22) Anmeldetag: **30.04.91**

(43) Veröffentlichungstag der Anmeldung:
**04.11.92 Patentblatt 92/45**

(84) Benannte Vertragsstaaten:
**DE**

(71) Anmelder: **CIBA-GEIGY AG**
**Klybeckstrasse 141**
**CH-4002 Basel(CH)**

(72) Erfinder: **Mirza, Sohail, Dr.**
**Zihlackerstrasse 9**
**CH-Reinach(CH)**
Erfinder: **Harvey, Jeremy, Dr.**
**58, rue de la Neuville**
**B-1348 Louvain-la-Neuve(Be)**

(54) **Hydroxylsubstituierte Cyclohexenphoshonsäure und Verfahren zu deren Herstellung.**

(57) (3R,4S,5R)-3,4,5-Trihydroxy-cyclohex-1-en-1-phosphonsäure der Formel I

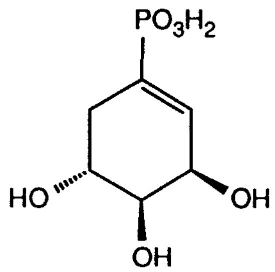

(I).



Rank Xerox (UK) Business Services

Die Erfindung betrifft eine mit drei Hydroxylgruppen substituierte Cyclohex-1-en-1-phosphonsäure in Form eines Diastereomeren und ein Verfahren zu dessen Herstellung durch a) eine Horner-Wittig-Olefinierung von acetalisiertem D-Lyxose-5-aldehyd mit Methylendiphosphonsäuretetraethylester, b) die stereoselektive Hydrierung des erhaltenen Olefins unter Abspaltung der anomeren Schutzgruppe zu einem Hemiacetal, c) eine intramolekulare Olefinierung des Hemiacetals unter dem Einfluss von einem Alkalimetallalkoholat zum geschützten Cyclohexenphosphonsäurediethylester, und d) die Abspaltung der Schutzgruppe und Verseifung der Estergruppe.

Ein Gegenstand der Erfindung ist somit eine Verbindung der Formel I

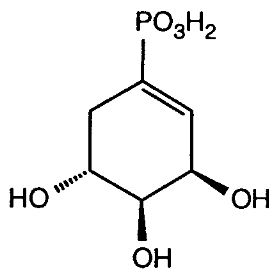

(I).

Die Verbindung der Formel I weist eine 3R,4S,5R-Konfiguration auf; es handelt sich um (3R,4S,5R)-3,4,5-Trihydroxy-cyclohex-1-en-1-phosphonsäure.

Ein anderer Gegenstand der Erfindung ist ein Verfahren zur Herstellung der Verbindung der Formel I, das dadurch gekennzeichnet ist, dass man in an sich bekannter Weise

a) einen D-Lyxosealdehyd der Formel II

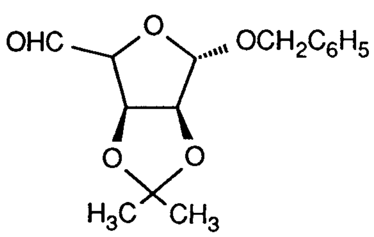

(II)

in Gegenwart eines Lösungsmittels, einer Base und $TiCl_4$ als Katalysator mit Methylendiphosphonsäuretetraethylester der Formel III

$H_2C[PO(OC_2H_5)]_2$ (III)

umsetzt,

b) das erhaltene Olefin der Formel IV

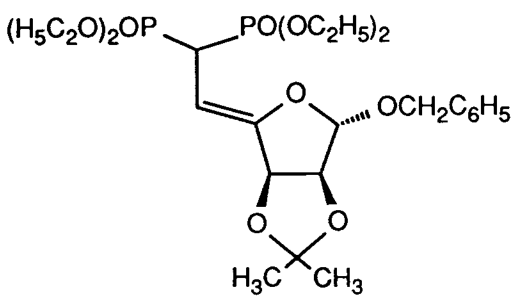

(IV)

katalytisch hydriert,

c) die hydrierte Verbindung der Formel V

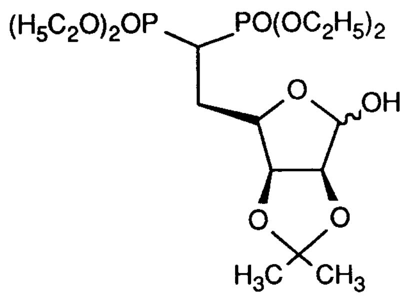

(V)

unter Einwirkung von Natriumalkoholat in alkoholischer Lösung zum Cyclohexenphosphonsäuredieethylester der Formel VI umsetzt,

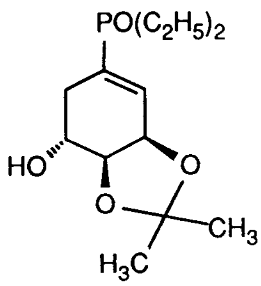

(VI),

d) aus der Verbindung VI die Acetalschutzgruppe abspaltet und den erhaltenen Trihydroxycyclohexenphosphonsäurediethylester der Formel VII

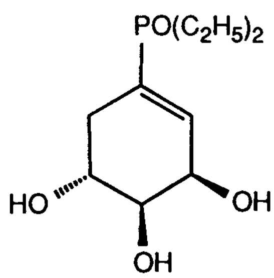

(VII)

zur Cyclohexenphosphonsäure der Formel I verseift.

Die in der Verfahrensstufe a) verwendete Verbindung der Formel II ist bekannt und käuflich. Als Base können zum Beispiel tertiäre Amine verwendet werden. Bevorzugt wird N-Methylmorpholin verwendet. Als Lösungsmittel verwendet man vorzugsweise polare und aprotische Lösungsmittel, zum Beispiel Ether oder halogenierte Kohlenwasserstoffe oder Mischungen solcher Lösungsmittel. Einige Beispiele sind Diethylether, Tetrahydrofuran und Dioxan sowie Methylenchlorid, Chloroform und Tetrachlorkohlenstoff. Die Reaktionstemperatur kann zum Beispiel-20 °C bis +40 °C betragen.

Die Hydrierung bei der Verfahrensstufe b) wird zweckmässig mit Palladium als Katalysator in einer Wasserstoffatmosphäre unter Normaldruck oder erhöhtem Druck bei Raumtemperatur in einem alkoholischen Lösungsmittel, zum Beispiel Ethanol, durchgeführt.

Die Reaktion der Verfahrensstufe c) wird vorteilhaft bei Raumtemperatur durchgeführt. Geeignete Natriumalkoholate sind zum Beispiel Natriummethylat, Natriumethylat und Natriumpropanat, und als Losungsmittel geeignete Alkohole sind zum Beispiel Methanol, Ethanol und Propanol. Bevorzugt werden Natriumethylat und Ethanol verwendet.

Die Abspaltung der Acetalgruppe bei der Verfahrensstufe d) wird bevorzugt mit Trimethylbromsilan in einem halogenierten Kohlenwasserstoff als Lösungsmittel durchgeführt, zum Beispiel Methylenchlorid oder Chloroform. Die Reaktionstemperatur beträgt vorteilhaft von -20 °C bis +40 °C. Die Verseifung erfolgt in an sich bekannter Weise mit Wasser oder verdünnten Säuren.

Das nachfolgende Beispiel erläutert die Erfindung.

Beispiel:

a) Herstellung der Verbindung der Formel IV.

1,93 g (6,93 mmol) Verbindung der Formel II und 2,0g (6,94 mmol) Methylendiphosphonsäuretetraethylester werden in 30ml Tetrahydrofuran gelöst. Diese Lösung wird unter Rühren zu einer auf 0 ° C gekühlten Lösung von 2,6 g (13,7 mmol) $TiCl_4$ in 5 ml Tetrachlorkohlenstoff getropft. Zu dieser Mischung wird nach 10 Minuten langsam während 30 Minuten eine Lösung von 2,8 g (27,7 mmol) N-Methylmorpholin in 10 ml Tetrahydrofuran getropft. Man lässt die Mischung auf Raumtemperatur erwärmen und rührt noch 14 Stunden. Die Reaktionsmischung wird am Rotationsverdampfer eingeengt, der Rückstand mit Essigsäureethylester aufgenommen und die Lösung über Silicagel chromatographiert.

Man isoliert 2,4 g (Ausbeute 64 %) Produkt als leicht gelbes Öl. $[\alpha]_D^{20}$ = -17,7 (c = 1, $CHCl_3$).

b) Herstellung der Verbindung der Formel VI.

Eine Lösung von 300 mg (0,55 mmol) des nach a) hergestellten Produkts in 5 ml Ethanol wird bei Raumtemperatur in Gegenwart von 200 mg Pd-Katalysator (5 % Pd/C) hydriert, bis keine Wasserstoffaufnahme mehr erfolgt. Die Reaktionsmischung wird über Celite filtriert. Das Filtrat wird mit einer 0,5-molaren Lösung von Natriumethylat in 3,3 ml Ethanol vermischt und 16 Stunden bei Raumtemperatur gerührt. Danach wird am Rotationsverdampfer eingeengt, der Rückstand in Essigsäureethylester/Ethanol (19:1) aufgenommen und die Lösung über Silicagel chromatographiert. Man erhält 70 mg (Ausbeute 42 %) Produkt als viskoses Öl. $[\alpha]_D^{20}$ = -46,5 (c = 0,8, $CHCl_3$); $^1$H-NMR (300 MHz,$CDCl_3$): δ 6,73 (1 H, md, J (P,H) = 21, vinylisches H).

c) Herstellung von (3R,4S,5R)-3,4,5-Trihydroxy-cyclohex-1-en-1-phosphonsäure.

3 g (9,8 mmol) des gemäss b) hergestellten Produkts werden in 15 ml Chloroform gelöst, auf 0 ° C gekühlt und unter Rühren mit 5,97 g (39 mmol) Trimethylbromsilan versetzt. Man lässt auf Raumtemperatur erwärmen und rührt noch 24 Stunden. Zu der Reaktionslösung werden danach 20 ml Wasser gegeben und die Mischung noch 14 Stunden gerührt. Aus der abgetrennten wässrigen Phase wird die Titelverbindung ausgefällt. Man erhält 2 g (Ausbeute 97 %) eines hygroskopischen Feststoffes. 1H-NMR (300 MHz, $D_2O$): 2,04 (1 H, m); 2,55 (1H, dt, J = 17 und 6,3); 3,56 (1 H, dd, J = 9 und 4,5); 3,82 (1 H, m); 4,22 (1 H, m); 6,20 (1 H, md, J(P,H) = 20, vinylisches H). $^{31}$P-NMR (100 MHZ, $D_2O$): 11,66.

## Patentansprüche

**1.** (3R,4S,5R)-3,4,5-Trihydroxy-cyclohex-1-en-1-phosphonsäure der Formel I

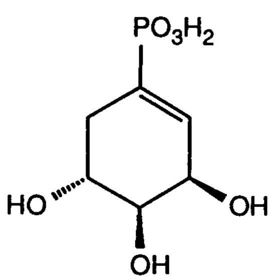

(I).

**2.** Verfahren zur Herstellung der Verbindung der Formel I, dadurch gekennzeichnet, dass man in an sich bekannter Weise

a) einen D-Lyxosealdehyd der Formel II

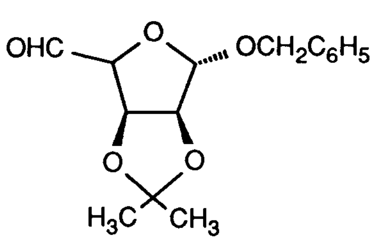

(II)

in Gegenwart eines Lösungsmittels, einer Base und $TiCl_4$ als Katalysator mit Methylendiphosphon-

säuretetraethylester der Formel III

$H_2C[PO(OC_2H_5)]_2$ (III)

umsetzt,

b) das erhaltene Olefin der Formel IV

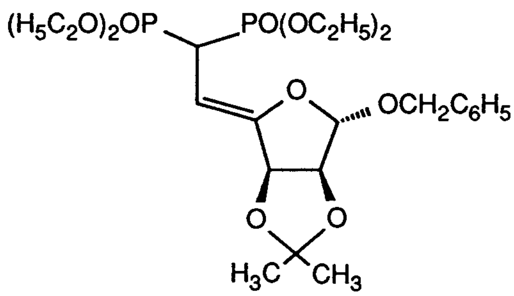

(IV)

katalytisch hydriert,

c) die hydrierte Verbindung der Formel V

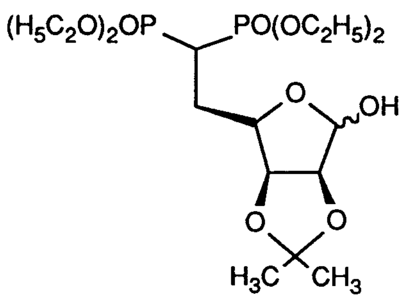

(V)

unter Einwirkung von Natriumalkoholat in alkoholischer Lösung zum Cyclohexenphosphonsäurediethylester der Formel VI umsetzt,

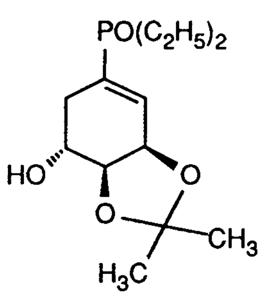

(VI),

d) aus der Verbindung VI die Acetalschutzgruppe abspaltet und den erhaltenen Trihydroxycyclohexenphosphonsäurediethylester der Formel VII

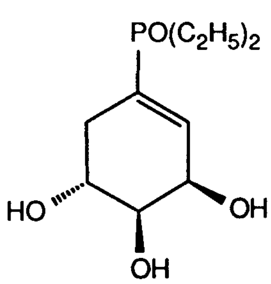

(VII)

zur Cyclohexenphosphonsäure der Formel I verseift.

Europäisches Patentamt

# EUROPÄISCHER RECHERCHENBERICHT

Nummer der Anmeldung

EP 91 81 0335

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | HELVETICA CHIMICA ACTA.<br>Bd. 67, Nr. 6, 1984, BASEL CH<br>Seiten 1562 - 1567;<br>SOHAIL MIRZA ET AL.: 'Synthesis of Methyl Shikimate and of Diethyl Phosphashikimate from D-Ribose'<br>----- | 1,2 | C07F9/38 |
| | | | **RECHERCHIERTE SACHGEBIETE (Int. Cl.5 )** |
| | | | C07F |

Der vorliegende Recherchenbericht wurde für alle Patentansprüche erstellt

| Recherchenort | Abschlußdatum der Recherche | Prüfer |
|---|---|---|
| DEN HAAG | 17 DEZEMBER 1991 | BESLIER L.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument